# Europäisches Patentamt
## European Patent Office
## Office européen des brevets

(19)

(11) Veröffentlichungsnummer: **0 239 531**
**B1**

(12)

# EUROPÄISCHE PATENTSCHRIFT

(45) Veröffentlichungstag der Patentschrift:
03.01.90

(21) Anmeldenummer: 87810132.8

(22) Anmeldetag: 09.03.87

(51) Int. Cl.⁴: **C08G 18/30**, B60R 13/06, C08J 7/12

(54) Herstellung einer Montage-Klebedichtung.

(30) Priorität: 25.03.86 CH 1196/86
31.05.86 DE 3618405

(43) Veröffentlichungstag der Anmeldung:
30.09.87 Patentblatt 87/40

(45) Bekanntmachung des Hinweises auf die Patenterteilung:
03.01.90 Patentblatt 90/1

(84) Benannte Vertragsstaaten:
AT BE CH DE ES FR GB GR IT LI LU NL SE

(56) Entgegenhaltungen:
DE-A- 3 409 960
FR-A- 2 303 058
US-A- 3 707 521
US-A- 4 374 237

(73) Patentinhaber: Gurit-Essex AG,
CH-8807 Freienbach(CH)

(72) Erfinder: Saur, Wolfgang, Dr., Schwerzistrasse 4,
CH-8708 Männedorf(CH)

(74) Vertreter: Rottmann, Maximilian R., c/o Rottmann, Quehl & Zimmermann AG Glattalstrasse 37,
CH-8052 Zürich(CH)

ACTORUM AG

## Beschreibung

Die Erfindung betrifft die in den Ansprüchen 1 bis 7 umschriebenen Verfahren zur Herstellung einer Montage-Klebedichtung sowie die in Anspruch 8 umschriebene Anwendung dieser Verfahren zur montagefertigen Vorbereitung und Montage von Autoscheiben.

Polyurethane werden heute in verschiedenen, technischen Anwendungsgebieten eingesetzt; ein technisch speziell wichtiges Gebiet ist dabei die Klebe- und Abdichtungstechnologie. In der einschlägigen Literatur, z.B. in A. Damusis: SEALANTS, Reinhold Publishing Corp., 1967, oder auch in G. Habenicht: KLEBEN, Springer-Verlag, wird dabei zwischen Zweikomponenten- und Einkomponenten-Polyurethan-Klebe- bzw. -dichtungsmaterialien unterschieden. Wegen einfacherer Applikation werden vielfach die Einkomponenten-Materialien bevorzugt.

Derartige Materialien sind normalerweise Vorstufen von Hochpolymeren, sog. Prepolymere. Diese Verbindungen werden z.B. aus höhermolekularen Polyolen und einer überstöchiometrischen Menge an Diisocyanat hergestellt; sie liegen also schon teilweise mit Urethanbrücken vor.

Unter Urethan-Prepolymermassen sollen hier alle formbaren Zubereitungen von Prepolymeren auf breitester Ausgangsbasis mit freien Isocyanatgruppen verstanden werden.

Da in allen derartigen Prepolymeren aber noch freie Isocyanatgruppen vorhanden sind, kann das Prepolymer noch reagieren, z.B. mit Luftfeuchtigkeit, bzw. aushärten. Derartige Polyurethan-Prepolymere sind u.a. beschrieben in den US-PS 3 707 521 und 3 779 794. Ein bedeutendes Anwendungsgebiet dieser Urethanprepolymere mit freien NCO-Gruppen ist die Verklebung von Glasscheiben in Metallrahmen, insbesondere die moderne Technologie des Einsetzens von Autoscheiben in Karosserien.

Die dabei auftretenden technischen Probleme sind u.a. in der DE-OS 3 409 960 dargelegt. Insbesondere wird in jener Veröffentlichung vorgeschlagen, für die Befestigung einer Autoscheibe an einem Befestigungsflansch einer Fahrzeugkarosserie zuerst auf der Glasscheibe einen Kleber-Teilstrang mit kalibriertem Querschnittprofil anzuordnen, der beim Einbau der Glasscheibe bereits ausgehärtet ist. Die Verklebung dieses Teilstranges mit dem Befestigungsflansch erfolgt mit Hilfe eines zweiten Kleber-Teilstranges, der zur Sichtfläche der Glasscheibe hin durch einen Begrenzungssteg des ausgehärteten Teilstranges abgedeckt wird. Dabei hat man schon früh erkannt, dass es neben den unbestrittenen Vorzügen dieses Verfahrens auch Nachteile gibt: Insbesondere, wenn zwischen dem Auftragen des Kleber-Teilstranges und der Montage der Scheibe eine namhafte Zeit verstreicht (in der Regel einige Tage bis einige Wochen und noch wesentlich länger bei Scheiben für Reparaturzwecke), ist eine zuverlässige Haftung des zweiten Kleber-Teilstranges auf dem ersten voraufgebrachten Teilstrang üblicherweise nicht mehr gegeben. Dies führt aber zu unannehmbar geringen Festigkeits- und Abdichtungswerten nach der Montage derartiger Glasscheiben.

Zum Problem der gegenseitigen Haftung der auf der Scheibe voraufgebrachten ersten Polyurethanschicht und der bei der Montage der Scheibe auf der ersten Schicht zu applizierenden Klebemasse auf der Basis von Polyurethan werden in der genannten DE-OS 3 409 960 lediglich zwei Lösungshinweise gegeben:
– Aufbringen eines Aktivators (beispielsweise eines Lösungsmittels) unmittelbar vor dem Einkleben der Scheibe; und
– Aufrauhen der Oberfläche der ersten Schicht.

Während der zweite Vorschlag in der praktischen Ausführung wohl kaum je wichtig werden wird, ist zum ersten zu bemerken, dass dadurch der Eintritt des Zustandes, bei dem die Haftung zwischen den beiden Polyurethanschichten nicht mehr mit genügender Sicherheit angenommen werden kann, höchstens um eine kurze und erst noch unbestimmte Zeitspanne verlängert wird. Außerdem stellt das Aufbringen des Aktivators unmittelbar vor dem Klebevorgang einen höchst unerwünschten zusätzlichen Arbeitsschritt dar.

Aus der FR-OS 2 303 058 ist ein Verfahren zum haftenden Verbinden von Oberflächen bekannt, bei welchem – neben anderen Verfahrensschritten – ein auf die Oberfläche eines Grundkörpers aufgetragenes Prepolymer mit endständigen NCO-Gruppen mit einer aktive Wasserstoffatome liefernden Verbindung, insbesondere Wasserdampf, in Kontakt gebracht wird. Diese Behandlung bewirkt eine Kettenverlängerung und erfolgt zu dem Zwecke, einen durch Wärme erweichbaren, d.h. thermoplastischen und klebefähigen Polyurethan-Überzug zu bilden. Eine spätere Umsetzung mit anderen NCO-Gruppen enthaltenden Substanzen findet dabei jedoch nicht statt und könnte auch gar nicht stattfinden, da bei dem Verfahren alles freie NCO-Gruppen ausreagieren.

Schliesslich sind aus der US-PS 4 373 237 härtbare, silanhaltige Polurethan-Prepolymere bekannt, welche NCO-Endgruppen aufweisen, von denen mindestens ein Teil mit einem ein sekundäres Amin enthaltendes Silan mit zwei Trialkoxysilan-Gruppen umgesetzt sind. Diese Prepolymere sind als Dichtungsmittel einsetzbar. Eine spätere Umsetzung mit anderen NCO-Gruppen enthaltenden Substanzen findet dabei jedoch nicht statt und könnte auch gar nicht stattfinden, da bei der Härtung alle noch freien NCO-Gruppen ausreagieren.

Aufgabe der vorliegenden Erfindung ist es nun, diese Nachteile zu vermeiden und ein Verfahren zu schaffen, mit dem die Oberflächenschicht des zuerst aufgebrachten Teilstranges so modifiziert werden kann, daß eine sichere Haftung des zweiten, eigentlichen Klebe- und Abdichtungs-Teilstranges auf dem voraufgebrachten, ersten Teilstrang jederzeit gewährleistet ist, ohne daß dieser unmittelbar vor der Montage der Glasscheibe chemisch oder mechanisch vorbehandelt werden müsste, und auch dann nicht, wenn zwischen dem Auftrag des ersten Teilstrangs und der Montage der Scheibe eine verhältnismäßig lange Zeit verstrichen ist.

Diese Aufgabe wird gelöst durch die in den Ansprüchen 1 bis 6 definierten Verfahren.

Selbst für den Fachmann war es überraschend, dass bei den erfindungsgemässen Verfahren eine voraufgebrachte Polyurethanmasse derart modifiziert wird, daß die Unterlage eine (innerhalb bestimmter, üblicher Bedingungen) genügend lange Lagerungsbeständigkeit aufweist. Es war auch überraschend, daß die Haftung einer anschliessend darauf aufgebrachten Polyurethanmasse mit freien NCO-Gruppen, verglichen mit nicht-modifizierten oder -aktivierten Unterlagen, erstaunlich fest ist.

Bei Verwendung von flüssigen Behandlungsmedien kann die Oberfläche der Urethanprepolymermasse mit Wasser oder Verbindungen mit Hydroxyl-, Sulfhydryl-, Carboxyl-, primären Amino- und/oder sekundären Amino-Gruppen bzw. Lösungen dieser Verbindungen in Kontakt gebracht werden, wobei die Konzentration der Medien in Lösungen je nach der Art ihres Aufbringens auf die Oberflächen bis zu 50 Gew.-% betragen kann.

Bei Verwendung von gasförmigen Medien wird die Oberfläche vorteilhafterweise mit einem Wasserdampf-Luft-Gemisch mit relativer Feuchtigkeit über 50%, vorzugsweise über 70%, in Kontakt gebracht. Andererseits können zweckmässigerweise Thioalkyl-, Aminoalkyl- oder Hydroxyalkyl-Trialkoxysilane Verwendung finden. Allfällige Nebenkomponenten bzw. weitere Bestandteile der Lösungen oder Gemische sollten dabei chemisch inert sein gegenüber der Isocyanatgruppe.

Die Flüssigkeiten bzw. Lösungen werden vorzugsweise auf die zu behandelnden Oberflächen aufgesprüht; die genannten Oberflächen können aber auch in die Fluide getaucht oder damit bestrichen werden. Es können Gas- bzw. Dampfmischungen auf die Beschichteten aufgeblasen werden, oder diese können in den entsprechenden Atmosphären bewegt oder gelagert werden.

Die Konzentration der Modifikationsmedien in den Lösungen kann in weiten Grenzen variieren. Sie ist vorwiegend von der Auftragsart bzw. der Auftragsmenge abhängig.

Zu den Lösungsmitteln für die flüssigen Mischungen ist zu bemerken, dass diese Lösungsmittel chemisch inert sein müssen, vor allem gegen NCO-Gruppen. Beispiele solcher Lösungsmittel sind Ketone, Ester, Kohlenwasserstoffe, Aether und Halogen-Kohlenwasserstoffe.

Erfindungsgemäss einzusetzende Modifizierungsmittel sind neben Wasser allgemein Verbindungen, welche als reaktive Molekülgruppen Hydroxy-, Mercapto-, Amino-, Alkoxysilan- und/oder Carboxyl-Gruppen enthalten.

Eine solche reaktive Verbindung kann 2 bis 6, vorzugsweise 2 bis 3, insbesondere 2 reaktive Molekülgruppen enthalten. Entsprechende Substanzgruppen sind z.B. Mercaptoalkohole, Aminoalkohole, Hydroxy-, Thio- oder Aminocarbonsäuren.

Als Beispiele für <u>Polyalkohole</u> können genannt werden:

- Aethylenglycol, Diaethylenglycol, Propylenglycol, Neopentylglycol, Propandiol-1,3, Butandiol-1,4, Butandiol-2,3, Glycerin, Pentaerythrit, Sorbitol, Butantriol-1,2,4, Trimethylolpropan.

Beispiele für <u>Mercaptoalkohole</u> sind:

- Mercaptoaethanol, Mercaptopropandiol, Dimercaptopropanol.

Beispiele für <u>Aminoalkohole</u> sind:

- Aethanolamin, Diaethanolamin, Diisopropanolamin, Triaethanolamin, Triisopropanolamin, 2,2ᴱ-Aminodiaethoxyaethanol, Aminoaethylaethanolamin, 2-Aminobutandiol-1, 2-Aminopropanol-1, 3-Aminopropanol-1, N-Methylaminopropandiol-2,3, 1-Aminopropandiol-2,3, N-Methylmethanolamin oder Hydroxyaethylpiperazin.

Beispiele für <u>Amino-, Hydroxy- oder Thiocarbonsäuren</u> sind:

- Glycin, N-Methylglycin, Alanin, Cystein, Serin, Lysin, Glycolsäure, Milchsäure, Apfelsäure, Thioglycolsäure oder Thiomilchsäure.

Beispiele für <u>Alkoxysilane</u> sind:

- Gamma-aminopropyltriaethoxysilan
- Gamma-mercaptopropyltrimethoxysilan
- N-beta(aminoaethyl-)gamma-aminopropyltrimethoxysilan
- N-N-bis((trimethoxysilyl)propyl)amin
- Gamma-Glycidoxypropyltrimethoxysilan.

Das erfindungsgemässe Verfahren wird im folgenden anhand von Ausführungsbeispielen näher beschrieben. Für alle im folgenden beschriebenen Beispiele wurde dieselbe Versuchsanlage benützt:

Auf Silikatglasabschnitte wurde zuerst eine nach dem US-Patent Nr. 3 707 521, Beispiel 2, hergestellte Glas-Haftgrundierung aufgetragen. Anschliessend wurden diese grundierten Glasplatten mit einer nach dem US-Patent Nr. 3 779 794, Beispiel 1, hergestellten Polyurethanmasse beschichtet, wie sie üblicherweise zum Einkleben von Autoscheiben verwendet wird. Eine Variante dieser Masse wurde als Polyurethanmasse A mit einem Kohlenwasserstoff-Weichmacher, eine andere als Polyurethanmasse B mit einem Phthalat-Weichmacher hergestellt. Im folgenden werden diese beschichteten Platten als Substrate bezeichnet.

Nach dem erfindungsgemässen Verfahren wurde nun ein Teil der Substrate sofort nach dem Auftragen der Beschichtung den in den folgenden Beispielen beschriebenen Behandlungen ausgesetzt. Anschliessend erfolgte eine Lagerung unter normalen Umgebungsbedingungen, zusammen mit dem unbehandelten Teil der Substrate, bis zum Ablauf der in den Beispielen festgelegten Offenzeit.

Anschliessend wurden die Substrate mit Polyurethanmasse-Strängen gemäss dem US-Patent Nr. 3 779 794, Beispiel 1, Variante B, beschichtet und zur vollständigen Durchhärtung dieser Stränge weiter gelagert. Im folgenden wird diese Masse als Montagekleber bezeichnet.

Die Prüfung der Haftfestigkeit des Montageklebers auf dem Substrat erfolgte durch Abschälen, wobei als Messwert der prozentuale Anteil an kohäsiv brechender Haftfläche, bezogen auf die ganze Strangfläche des aufgebrachten Montageklebers, festgehalten wurde.

Beispiel 1 (Vergleichsversuch)

In diesem Beispiel wurde die Veränderung der Haftung eines bei weniger als 50 % Luftfeuchtigkeit ausgehärteten Substrates in Abhängigkeit von der Offenzeit bis zur Beschichtung mit Montagekleber untersucht. Die erhaltenen Haftwerte sind in Tabelle 1 wiedergegeben:

**Tabelle 1**

| Offenzeit | % Kohäsionsbruch | |
|---|---|---|
| | PU-Schicht A | PU-Schicht B |
| 3 Tage | 25 | 50–75 |
| 14 Tage | 0 | 0–10 |
| 30 Tage | 0 | 0 |

Beispiel 2: (Vergleichsversuch)

In diesem Beispiel wird der gleiche Versuch, wie unter Beispiel 1 beschrieben, auf Substraten wiederholt, welche nach dem in der DE-OS 34 09 960 beschriebenen Verfahren vor dem Auflegen des Montageklebers mit einem Lösungsmittel-Aktivator, bestehend aus einem gemisch von 90 Gew.-Teilen Methylaethylketon und 10 Gew.-Teilen N-Methylpyrrolidin, behandelt worden waren. Tabelle 2 zeigt die erhaltenen Resultate:

**Tabelle 2**

| Offenzeit | % Kohäsionsbruch | |
|---|---|---|
| | PU-Schicht A | PU-Schicht B |
| 3 Tage | 60–80 | 100 |
| 14 Tage | 50–75 | 80–90 |
| 30 Tage | 0 | 0 |

Beispiel 3:

Im Beispiel 3 wurde die Substrat-Oberfläche erfindungsgemäss durch 3-tägige Behandlung mit Wasserdampf-Luft-Gemischen unterschiedlicher relativer Feuchtigkeit modifiziert, wobei nach 14 Tagen Offenzeit mit diesen Gemischen folgende Haftwerte erzielt wurden:

Tabelle 3

| Rel. Feuchtigkeit | % Kohäsionsbruch | |
| --- | --- | --- |
| | PU-Schicht A | PU-Schicht B |
| 10% | 25 | 25 |
| 50% | 25 | 25–35 |
| 90% | 100 | 100 |

Ein Blindversuch zu obigem Beispiel, bei welchem die Substratoberfläche bis zur vollständigen Durchhärtung einem Wasserdampf-Luftgemisch von 10 % relativer Feuchtigkeit ausgesetzt war und erst anschliessend mit einem solchen von 90 % relativer Feuchtigkeit behandelt wurde, ergab 25 % Kohäsionsbruch bei beiden PU-Schichten.

Beispiel 4:

In diesem Beispiel wurde die Polyurethanmasse A als Substrat verwendet. Die erfindungsgemässe Modifikation der Substratoberfläche erfolgte durch Aufsprühen verdünnter Lösungen der in Tabelle 4 erwähnten Chemikalien in organischen, gegen NCO inerten Lösungsmitteln wie z.B. Methylaethylketon, Toluol oder Aethylacetat, sofort nach dem Beschichten. Die Konzentration der Lösungen wurde in diesem Beispiel auf 5 % angesetzt. Tabelle 4 fasst die erhaltenen Resultate nach verschiedenen Offenzeiten zusammen:

Tabelle 4

| Lösung | % Kohäsionsbruch nach Offenzeiten von | | |
| --- | --- | --- | --- |
| | 7 Tagen | 30 Tagen | 90 Tagen |
| (ohne) | 25 | 0 | 0 |
| Aethylenglycol | 90 | 100 | 0 |
| Monomethylaethanolamin | 100 | 100 | 100 |
| Diaethanolamin | 100 | 100 | 100 |
| 3-Aminopropanol | 100 | 100 | 75–100 |
| Mercaptoaethanol | 100 | 90 | 50 |
| Wasser | 90 | 80 | 50 |
| Glycerin | 100 | 75 | 0 |
| v-Mercaptopropyltrimethoxysilan | 100 | 100 | 100 |

Die Ausführungsbeispiele zeigen also sehr deutlich:
- Die Behandlung mittels Aktivatoren gemäss dem Stand der Technik (Beispiel 2) ergibt zwar eine Verlängerung der Zeit, während der die PU-Oberfläche sicher verklebt werden kann, jedoch nur um ca. 10 Tage. Anschliessend fällt der Prozentsatz Kohäsionsbruch - d.h. das Mass der Verklebungs-Kapazität der behandelten Oberfläche - auf Null.
- Erst die erfindungsgemässe Behandlung gemäss den Beispielen 3 (90 % relative Feuchtigkeit) und 4 bringt eine technisch relevante Verlängerung der guten Verklebungseigenschaften der modifizierten Oberflächen.
Aus den vorstehenden Beispielen geht klar hervor, dass die Werte für Kohäsionsbruch und Festigkeit deutlich, z.T. sogar um Grössenordnungen besser liegen, wenn das erfindungsgemässe Verfahren angewandt wird.

**Patentansprüche**

1. Verfahren zur Herstellung einer Montage-Klebedichtung, dadurch gekennzeichnet, dass man eine zweite Klebedichtungsmasse auf der Basis von Urethan-Prepolymeren mit freien NCO-Gruppen auf eine auf eine zu montierende Scheibe aufgebrachte erste Klebedichtungsmasse auf der Basis von Polyurethanen, deren Oberfläche nach der Formgebung und vor deren Härtung mit einem Wasserdampf-Luft-Gemisch mit einer derartigen relativen Feuchtigkeit behandelt wurde, dass die freien NCO-Gruppen in einer Oberflächenschicht der Polyurethanmasse umgesetzt wurden, aufträgt und anschliessend die zweite Klebedichtungsmasse aushärten läßt.

2. Verfahren zur Herstellung einer Montage-Klebedichtung, dadurch gekennzeichnet, dass man eine zweite Klebedichtungsmasse auf der Basis von Urethan-Prepolymeren mit freien NCO-Gruppen auf eine auf eine zu montierende Scheibe aufgebrachte erste Klebedichtungsmasse auf der Basis von Polyurethanen, deren Oberfläche nach der Formgebung und vor deren Härtung mit einer reaktiven Verbindung, die eine gegenüber Isocyanat reaktive, wasserstoffaktive Gruppe und daneben eine Alkoxysilangruppe oder mindestens eine weitere, wasserstoffaktive Gruppe pro Molekül aufweist, in derartiger Konzentration behandelt wurde, dass die freien NCO-Gruppen in einer Oberflächenschicht der Masse umgesetzt wurden, aufträgt und anschliessend die zweite Klebedichtungsmasse aushärten lässt.

3. Verfahren nach Patentanspruch 1, dadurch gekennzeichnet, dass man die zweite Klebedichtungsmasse auf eine erste Klebedichtungsmasse aufbringt, deren Oberfläche mit einem Wasserdampf-Luft-Gemisch mit einer relativen Feuchtigkeit von mindestens 50%, vorzugsweise von mehr als 70%, in Kontakt gebracht wurde.

4. Verfahren nach Patentanspruch 2, dadurch gekennzeichnet, dass man die zweite Klebedichtungsmasse auf eine erste Klebedichtungsmasse aufbringt, deren Oberfläche mit einer reaktiven Verbindung behandelt wurde, die als gegenüber Isocyanat reaktive, wasserstoffaktive Gruppen Hydroxyl-, Sulfhydryl-, Carboxyl-, primäre Amino- und/oder sekundäre Amino-Gruppen enthält.

5. Verfahren nach Patentanspruch 4, dadurch gekennzeichnet, dass man die zweite Klebedichtungsmasse auf eine erste Klebedichtungsmasse aufbringt, deren Oberfläche mit der reaktiven Verbindung in Form einer Lösung oder eines Dampfes behandelt wurde, wobei allfällige weitere Bestandteile inert sind gegenüber der Isocyanat-Gruppe.

6. Verfahren nach Patentanspruch 2, dadurch gekennzeichnet, dass man die zweite Klebedichtungsmasse auf eine erste Klebedichtungsmasse aufbringt, deren Oberfläche mit Thioalkyl-, Aminoalkyl- oder Hydroxyalkyl-Trialkoxysilan behandelt wurde.

7. Anwendung des Verfahrens nach einem oder mehreren der Patentansprüche 1 bis 6 zur montagefertigen Vorbereitung und Montage von Autoscheiben.

**Claims**

1. Process for the production of an assembly adhesive seal, characterized in that a second adhesive sealing composition based on urethane prepolymers having free NCO groups is applied to a first adhesive sealing composition based on polyurethanes which has been applied to a pane which is to be assembled, the surface of said first adhesive sealing composition having been treated after shaping and before curing thereof with a water vapour/air mixture having a relative humidity such that the free NCO groups in a surface layer of the polyurethane composition have been reacted, and then the second adhesive sealing composition is allowed to cure fully.

2. Process for the production of an assembly adhesive seal, characterized in that a second adhesive sealing composition based on urethane prepolymers having free NCO groups is applied to a first adhesive sealing composition based on polyurethanes which has been applied to a pane which is to be assembled, the surface of said first adhesive sealing composition having been treated after shaping and before curing thereof with a reactive compound which has a hydrogen-active group which is reactive towards isocyanate and additionally has an alkoxysilane group or at least one other hydrogen-active group per molecule, in a concentration such that the free NCO groups in a surface layer of the composition have been reacted, and then the second adhesive sealing composition is allowed to cure fully.

3. Process according to Patent Claim 1, characterized in that the second adhesive sealing composition is applied to a first adhesive sealing composition whose surface has been brought into contact with a water vapour/air mixture having a relative humidity of at least 50%, preferably of more than 70%.

4. Process according to Patent Claim 2, characterized in that the second adhesive sealing composition is applied to a first adhesive sealing composition whose surface has been treated with a reactive compound, which contains hydroxyl groups, sulfhydryl groups, carboxyl groups, primary amino groups and/or secondary amino groups as hydrogen-active groups which are reactive towards isocyanate.

5. Process according to Patent Claim 4, characterized in that the second adhesive sealing composition is applied to a first adhesive sealing composition whose surface has been treated with the reactive compound in the form of a solution or in the form of a vapour, any other components being inert towards the isocyanate group.

6. Process according to Patent Claim 2, characterized in that the second adhesive sealing composition is applied to a first adhesive sealing composition whose surface has been treated with thioalkyltrialkoxysilane, aminoalkyltrialkoxysilane or hydroxyalkyltrialkoxysilane.

7. Use of the process according to one or more of Patent Claims 1 to 6 for the ready-for-assembly preparation of automobile panes, and the assembly thereof.

**Revendications**

1. Procédé pour la fabrication d'un joint de montage, caractérisé en ce que l'on applique un second matériau de joint à base de prépolymères d'uréthane avec des groupes NCO libres sur un premier matériau de joint à base de polyuréthanes appliqué sur une vitre devant être installée, matériau dont la superficie est traitée après la mise en forme et avant son durcissement par un mélange vapeur d'eau-air avec une humidité relative telle que les groupes NCO libres soient convertis dans une couche de surface du matériau en polyuréthane et enfin que l'on fait durcir le second matériau de joint.

2. Procédé pour la fabrication d'un joint de montage, caractérisé en ce que l'on applique un second matériau de joint à base de prépolymères d'uréthane avec des groupes NCO libres sur un premier matériau de joint à base de polyuréthanes appliqué sur une vitre devant être installée, matériau dont la superficie est traitée après la mise en forme et avant son durcissement avec une combinaison réactive qui comporte par molécule un groupe à hydrogène actif réactif par rapport à l'isocyanate et en outre un groupe alkoxysilane ou au moins un autre groupe à hydrogène actif, en concentration telle que les groupes NCO libres soient convertis dans une couche de surface du matériau en polyuréthane et enfin que l'on fait durcir le second matériau de joint.

3. Procédé selon la revendication 1, caractérisé en ce que l'on rapporte le second matériau de joint sur un premier matériau de joint, dont la surface est mise en contact avec un mélange vapeur d'eau-air ayant une humidité relative de au moins 50%, de préférence de plus de 70%.

4. Procédé selon la revendication 2, caractérisé en ce que l'on rapporte le second matériau de joint sur un premier matériau de joint, dont la surface est traitée avec une combinaison réactive, qui comporte comme groupes à hydrogène actif réactifs à l'encontre de l'isocyanate des groupes hydroxyle, sulfhydryle, carboxyle, amines primaire et/ou secondaire.

5. Procédé selon la revendication 4, caractérisé en ce que l'on rapporte le second matériau de joint sur un premier matériau de joint, dont la surface a été traitée avec une combinaison réactive sous forme d'une solution ou d'une vapeur, dont tous les autres éléments constitutifs éventuels sont inertes à l'égard du groupe isocyanate.

6. Procédé selon la revendication 2, caractérisé en ce que l'on rapporte le second matériau de joint sur un premier matériau de joint, dont la surface a été traitée avec du thioalkyl-, aminoalkyl- ou hydroxyalkyl-trialkoxysilane.

7. Application du procédé selon l'une ou plusieurs des revendications 1 à 6 pour la préparation prête au montage et le montage de vitres automobiles.